# EUROPEAN PATENT APPLICATION

(11) **EP 4 617 162 A1**
(43) Date of publication of application: **17.09.2025**
(21) Application number: 23898242.5
(22) Date of filing: 27.11.2023
(51) Int. Cl.: B62M 11/14, B62M 9/06, F16H 21/18

(54) **BICYCLE CRANK TRANSMISSION**

(30) Priority: 28.11.2022 KR 20220161452
(71) Applicant: contavelo Inc., Ulsan 44992 (KR)
(72) Inventor: JU, Hyeonjin, Ulju-gun Ulsan 44965 (KR)
(74) Representative: Isarpatent
(86) International application number: PCT/KR2023/019249
(87) International publication number: WO 2024/117716

(57) **Abstract**

Disclosed herein is a bicycle crank shifting device. The bicycle crank shifting device according to an embodiment of the present invention includes: a ring gear unit having direct engagement ratchets arranged on an outer side thereof and gear teeth formed on an inner circumferential surface thereof; a crank cover having direct engagement ratchet teeth formed on an inner circumferential surface thereof and a coupling shaft formed thereon, the direct engagement ratchet teeth being configured to selectively engage with the direct engagement ratchets; a sun gear unit mounted on the coupling shaft; a reduction gear unit including an eccentric guide having an eccentric hole formed therein, and an eccentric gear coupled to the eccentric guide, a portion of the eccentric gear being engaged with the ring gear unit and another portion being engaged with the sun gear unit; a chainring housing rotating together with the ring gear unit, the chainring housing having one surface on which the direct engagement ratchets are arranged and an outer circumferential surface on which chainring coupling parts are formed; an electromagnet configured to selectively engage the direct engagement ratchets with the direct engagement ratchet teeth; a power supply unit controlled by a control module and supplying current to the electromagnet; and an operation module connected to the control module via wireless communication and configured to selectively turn the power supply unit on or off.

## Description

### Technical Field

The present invention relates to a bicycle crank shifting device, and more specifically, to a bicycle crank shifting device with a built-in transmission.

### Background Art

In general, a gear transmission of a bicycle is installed to allow a rider to pedal with a constant force and speed according to riding conditions. Bicycle shifting is divided into front gear shifting and rear gear shifting. The front gear shifting is performed by overlapping chainrings having different numbers of teeth, and the rear gear shifting is performed by overlapping sprockets having different numbers of teeth. A gear ratio determined by the number of teeth of the front gear (chainring) and the rear gear (sprocket) results in differences in the riding speed of the bicycle under the same pedaling conditions.

However, in the front gear shifting of a conventional bicycle, due to the shifting mechanism that forcibly moves the position of a chain, the chain frequently disengages from the chainring during the shifting process. Moreover, refitting the disengaged chain to the chainring is not easy, and during the refitting process, a user's hands or clothing may be contaminated by the lubricant applied to the chain.

Furthermore, when front gear shifting is realized by stacking a plurality of chainrings and moving the chain, there is a limitation in the miniaturization and weight reduction of a device.

To overcome the problems, the applicant has registered Patent No. 10-1701289 titled "Bicycle crank shifting device". In the disclosed literature, during the shifting process, an operation protrusion of a direct engagement ratchet is received in a receiving portion of a direct engagement ratchet clutch or supported by a supporter, thereby causing the elastically supported operation protrusion to expand or retract. Such an action, in which the operation protrusion is repeatedly received or supported, may cause reduced durability.

To overcome the problem of the above patent, the applicant has registered Patent No. 10-2186944 titled "Crank assembly with built-in transmission". However, the patent case requires reverse rotation at the time of shifting, so has the disadvantage of reversing the pedals during riding.

### Disclosure

### Technical Problem

It is an objective of the present invention to provide a bicycle crank shifting device in which shifting is performed with only a single chainring by incorporating a transmission.

It is another objective of the present invention to provide a bicycle crank shifting device which enables easy shifting by selectively supplying power to an electromagnet through wireless communication.

It is another objective of the present invention to provide a bicycle crank shifting device capable of achieving miniaturization and weight reduction in structure.

The technical problems of the present invention are not limited to the mentioned above, and other technical problems not mentioned will be clearly understood by those skilled in the art from the following description.

### Technical Solution

To accomplish the above-mentioned objects, according to the present invention, there is provided a bicycle crank shifting device including: a ring gear unit having direct engagement ratchets arranged on an outer side thereof and gear teeth formed on an inner circumferential surface thereof; a crank cover having direct engagement ratchet teeth formed on an inner circumferential surface thereof and a coupling shaft formed thereon, the direct engagement ratchet teeth being configured to selectively engage with the direct engagement ratchets; a sun gear unit mounted on the coupling shaft; a reduction gear unit including an eccentric guide having an eccentric hole formed therein, and an eccentric gear coupled to the eccentric guide, a portion of the eccentric gear being engaged with the ring gear unit and another portion being engaged with the sun gear unit; a chainring housing rotating together with the ring gear unit, the chainring housing having one surface on which the direct engagement ratchets are arranged and an outer circumferential surface on which chainring coupling parts are formed; an electromagnet configured to selectively engage the direct engagement ratchets with the direct engagement ratchet teeth; a power supply unit controlled by a control module and supplying current to the electromagnet; and an operation module connected to the control module via wireless communication and configured to selectively turn the power supply unit on or off.

Here, the direct engagement ratchets are elastically supported outward in a radial direction of the ring gear unit to engage with the direct engagement ratchet teeth and are moved in the reverse direction when power is supplied to the electromagnet, thereby releasing the engagement with the direct engagement ratchet teeth.

Here, the chainring housing includes a base plate on which the ring gear unit is arranged, the chainring coupling parts being formed spaced apart on an outer circumferential surface of the base plate in a circumferential direction and coupled with a chainring. The direct engagement ratchets are arranged on one surface of the base plate, depressions are respectively formed in the chainring coupling parts, and the power supply unit and the control module are arranged in the depression.

Here, the bicycle crank shifting device further includes rotation parts arranged on the opposite surface of the base plate, connected to the direct engagement ratchets, and configured to rotate around a shaft depending on the application of power to the electromagnet.

Here, a first sidewall protrudes from an edge of one surface of the base plate, a second sidewall protrudes from an edge of an opposite surface of the base plate, and the electromagnet is arranged on the opposite surface of the base plate.

Here, the electromagnet is arranged on the opposite surface of the base plate, and the bicycle crank shifting device further includes pins connected to the electromagnet, the pin penetrating through the base plate, one end of the pin being spaced apart from the direct engagement ratchet and the direct engagement ratchet being in contact with the pin when current is applied to the electromagnet.

### Advantageous Effect

According to embodiments of the present invention, at least the following effects can be obtained.

According to the bicycle crank shifting device of the present invention, shifting can be performed with only a single chainring.

Additionally, the bicycle crank shifting device according to the present invention can conveniently perform shifting by selectively supplying power to the electromagnet through wireless communication.

Moreover, the bicycle crank shifting device according to the present invention can easily perform shifting by selectively supplying power to the electromagnet through wireless communication.

In addition, the overall structure of the crank can be simplified and lightweight.

The effects of the present invention are not limited to the examples described above, and various other effects are also included within the present specification.

### Description of Drawings

FIG. 1 is a perspective view of a bicycle crank shifting device according to a first embodiment of the present invention.
FIG. 2 is a bottom perspective view of the bicycle crank shifting device according to the first embodiment of the present invention.
FIG. 3 is a perspective view of a crank cover of the bicycle crank shifting device according to the first embodiment of the present invention.
FIG. 4 is a perspective view of a sun gear of the bicycle crank shifting device according to the first embodiment of the present invention.
FIG. 5 is an explanatory view of the crank cover and a sun gear unit of the bicycle crank shifting device according to the first embodiment of the present invention.
FIG. 6 is a front view of a ring gear unit of the bicycle crank shifting device according to the first embodiment of the present invention.
FIG. 7 is a perspective view of a reduction gear unit of the bicycle crank shifting device according to the first embodiment of the present invention.
FIG. 8 is an explanatory view showing the relationship between gears of the bicycle crank shifting device according to the first embodiment of the present invention.
FIG. 9 and FIG. 10 are perspective views of a chainring housing of the bicycle crank shifting device according to the first embodiment of the present invention.
FIG. 11 is a front view of the chainring housing of the bicycle crank shifting device according to the first embodiment of the present invention.
FIG. 12 is an explanatory view of a bicycle crank shifting device according to a second embodiment of the present invention.
FIG. 13 is an explanatory view during high-gear operation of the bicycle crank shifting device according to an embodiment of the present invention.
FIG. 14 is an explanatory view during low-gear operation of the bicycle crank shifting device according to an embodiment of the present invention.

### Mode for Invention

The present invention may be modified in various ways and may have various embodiments. Accordingly, specific embodiments are illustrated in the drawings and will be described in detail below. The effects and features of the present invention and methods for achieving the effects and features will become apparent by reference to the embodiments described in detail below with reference to the drawings. However, the present invention is not limited to the embodiments disclosed below and may be embodied in various forms, and it should be understood that all modifications, equivalents, and substitutes included within the spirit and technical scope of the present invention are encompassed.

Before describing in detail, terms used in the detailed description will be described. In the following embodiments, terms such as first, second, etc., are used to distinguish one component from another component and do not have limiting meanings. Therefore, a first component mentioned below may also be a second component within the technical spirit of the present invention. Furthermore, singular expressions include plural expressions unless the context clearly indicates otherwise. Additionally, terms such as "include" or "have" are intended to indicate that features, numbers, steps, operations, components, parts, or combinations thereof described in the specification exist, and do not preclude the possibility that one or more other features, numbers, steps, operations, components, parts, or combinations thereof may be added.

In addition, for convenience of explanation, the sizes of the components in the drawings may be exaggerated or reduced. For example, the size and thickness of each component shown in the drawings are illustrated arbitrarily for the sake of convenience, and the present invention is not necessarily limited to the illustrations.

Hereinafter, embodiments of the present invention will be described in detail with reference to the accompanying drawings. In the description with reference to the accompanying drawings, the same or corresponding components are denoted by the same reference numerals, and duplicate descriptions thereof will be omitted.

The bicycle crank shifting device according to an embodiment of the present invention is capable of shifting according to the rotation of a crank with only a single chainring by integrating a transmission inside, and can perform shifting easily by selectively supplying power to an electromagnet through wireless communication.

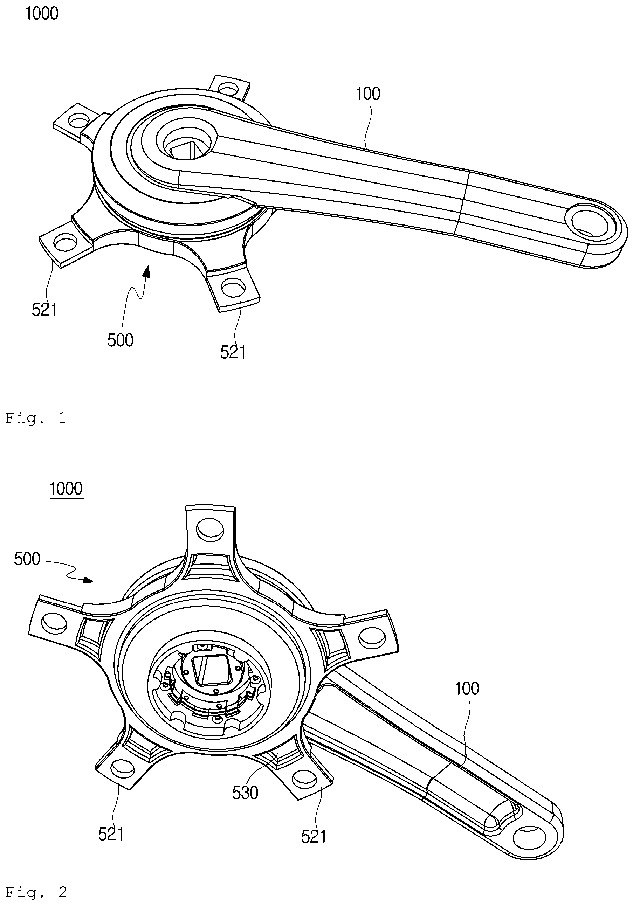

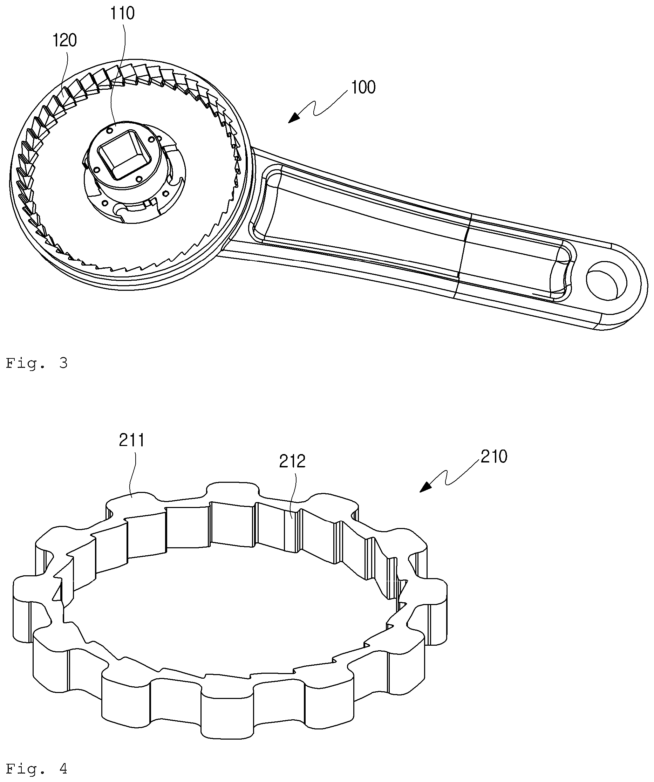

FIG. 1 is a perspective view of a bicycle crank shifting device according to a first embodiment of the present invention, FIG. 2 is a bottom perspective view of the bicycle crank shifting device according to the first embodiment of the present invention, and FIG. 3 is a perspective view of a crank cover of the bicycle crank shifting device according to the first embodiment of the present invention.

According to a first embodiment of the present invention, the bicycle crank shifting device includes a crank cover 100, a sun gear unit 200, a ring gear unit 300, a reduction gear unit 400, a chainring housing 500, an electromagnet 600, a power supply unit 700, a control module 800, and an operation module 900.

The crank cover 100 is configured to rotate together with a pedal shaft (not shown) coupled thereto by a user's pedaling. Through the rotation of the crank cover 100, driving force is transmitted to wheels, thereby allowing a bicycle to travel.

At the center of the inner surface of the crank cover 100, a coupling shaft 110 coupled to a spindle (not shown) of a bottom bracket (not shown) is formed. A shaft member (not shown) may be inserted into the coupling shaft 110.

On the inner wall of the crank cover 100, direct engagement ratchet teeth 120 are formed. The direct engagement ratchet teeth 120 are configured to engage with direct engagement ratchets 330 when the direct engagement ratchets 330 are deployed from the ring gear unit 300. That is, the direct engagement ratchet teeth 120 is configured to be engaged with the direct engagement ratchets 330 elastically supported (elastically deployed) by elastic members.

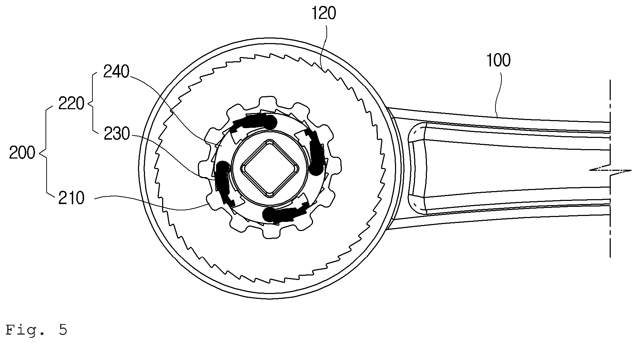

FIG. 4 is a perspective view of a sun gear of the bicycle crank shifting device according to the first embodiment of the present invention, and FIG. 5 is an explanatory view of the crank cover and the sun gear unit of the bicycle crank shifting device according to the first embodiment of the present invention.

The sun gear unit 200 is configured to transmit driving force when the crank cover 100 rotates. The sun gear unit 200 includes a sun gear 210 and a reverse rotation prevention unit 220.

The sun gear 210 includes sun gear teeth 211 formed on the outer circumferential surface thereof, and some of the sun gear teeth are engaged with an eccentric gear 420. When the bicycle is traveling, the sun gear 210 rotates. The sun gear 210 idles when in a high-gear, and rotates together with the crank cover 100 when in a low-gear. The rotation of the sun gear unit 200 will be described in detail in an operation section described below.

The sun gear 210 includes sun gear ratchet teeth 212 formed on the inner circumferential surface thereof. The sun gear ratchet teeth 212 is configured to rotate around the coupling shaft 110 when the crank cover 100 rotates in the forward direction. In this instance, the sun gear ratchet teeth 212 are configured to rotate in only one direction by the reverse rotation prevention unit 220, and in the present embodiment, are provided to rotate only in the forward direction (in the counterclockwise direction, see FIG. 5).

The reverse rotation prevention unit 220 is mounted on the outer circumferential surface of the coupling shaft 110 and is mounted on the crank cover 100. The reverse rotation prevention unit 220 includes a sun gear ratchet 230 and a sun gear ratchet fixing part 240 to which the sun gear ratchet 230 is coupled. The sun gear ratchet 230 is formed to engage with the sun gear ratchet teeth 212 formed on the inner circumferential surface of the sun gear unit 200. By the engagement of the sun gear ratchet teeth 212 and the sun gear ratchet 230, the sun gear unit 200 is allowed to rotate only in the counterclockwise direction in the drawings. The sun gear ratchet 230 may be elastically supported in a direction away from the center of the coupling shaft 110, that is, toward the sun gear ratchet teeth 212. Furthermore, the reverse rotation prevention unit 220 may further include a cover (not shown) to prevent the sun gear ratchet 230 from coming off.

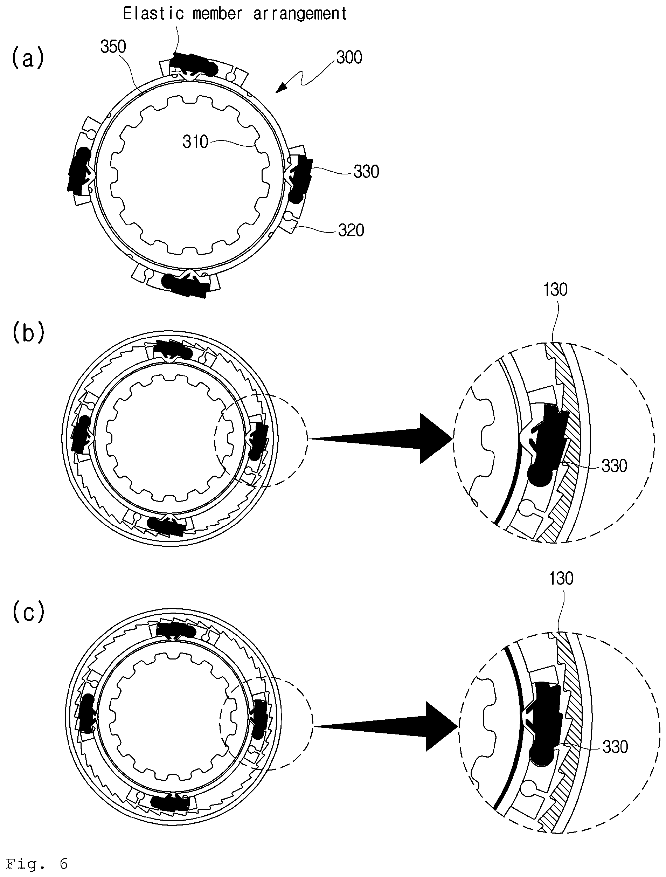

FIG. 6 is a front view of the ring gear unit of the bicycle crank shifting device according to the first embodiment of the present invention.

The ring gear unit 300 is configured to determine the high-gear and the low-gear during the bicycle traveling. The ring gear unit 300 is provided on one surface of a base plate 510. The ring gear unit 300 includes ring gear teeth 310 formed on the inner circumferential surface thereof, and some of the ring gear teeth are provided to engage with the eccentric gear 420. The ring gear unit 300 includes direct engagement ratchet arrangement parts 320 formed on the outer circumferential surface thereof, and the direct engagement ratchets 330 are arranged on the direct engagement ratchet arrangement parts. The direct engagement ratchet arrangement parts 320 are formed spaced apart from each other, and position fixing protrusions 513 formed on the other surface of the base plate 510 may be provided between the direct engagement ratchet arrangement parts 320. The position of the direct engagement ratchets 330 can be determined by the direct engagement ratchet arrangement parts 320.

The direct engagement ratchets 330 are configured to be selectively engaged with the direct engagement ratchet teeth 120, and according to whether the direct engagement ratchets 330 are engaged, the gear stage is classified into a high-gear and a low-gear. The direct engagement ratchets 330 are elastically supported outward in a radial direction of the ring gear unit 300. For example, elastic members may be provided, and the direct engagement ratchets 330 may be respectively coupled to the elastic members to be elastically supported in a direction away from a virtual center of the ring gear unit 300. Specifically, the elastic member may be provided as a plate spring and may be arranged at the direct engagement ratchet arrangement part 320. In this case, the plate spring may be fixed to the direct engagement ratchet arrangement part 320 and the direct engagement ratchet 330. Each of the elastic members is interposed between the direct engagement ratchet 330 and the direct engagement ratchet arrangement part 320 to elastically support the direct engagement ratchet 330 outward (that is, in a direction away from the virtual center of the ring gear unit 300), and the elastically supported direct engagement ratchet 330 engages with the direct engagement ratchet teeth 120.

A plurality of the direct engagement ratchets 330 are provided and spaced apart from each other. In the present embodiment, four direct engagement ratchets 330 are provided, and accordingly, four direct engagement ratchet arrangement parts 320 are also provided. However, the number of the direct engagement ratchets 330 is not limited thereto.

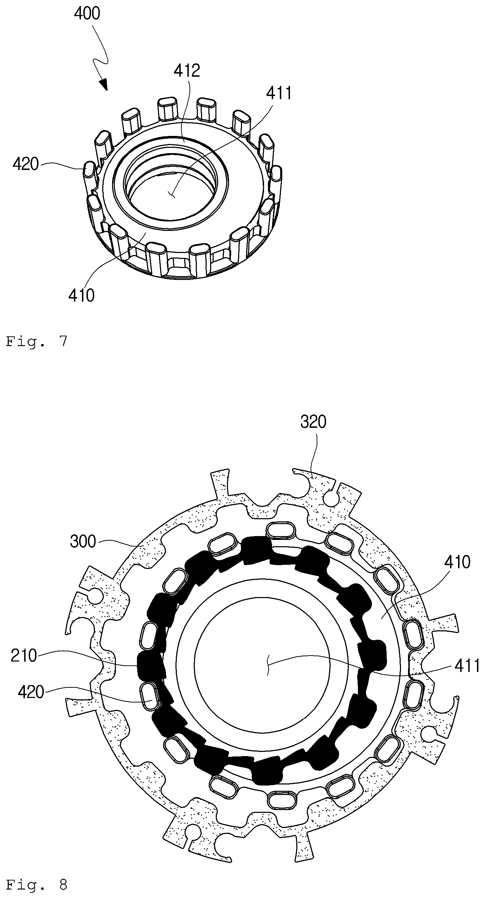

FIG. 7 is a perspective view of the reduction gear unit of the bicycle crank shifting device according to the first embodiment of the present invention, and FIG. 8 is an explanatory view illustrating the relationship between gears of the bicycle crank shifting device according to the first embodiment of the present invention.

The reduction gear unit 400 is configured to reduce the speed of the ring gear unit 300 in a low-gear state. Specifically, the reduction gear unit 400 is configured to receive rotational force from the crank cover 100 through the sun gear unit 200 in a low-gear state and rotate the ring gear unit 300 at a reduced rotational speed. The reduction gear unit 400 includes an eccentric guide 410 and an eccentric gear 420. The eccentric guide 410 includes an eccentric hole 411 formed therein. The eccentric guide 410 is fixedly installed on one side of the coupling shaft 110, and the hollow center of the coupling shaft 110 coincides with the hollow center of the eccentric hole 411. The eccentric guide 410 is provided inside the ring gear unit 300, and is arranged such that the center of the eccentric hole 411 matches the center of the ring gear unit 300. A bearing 412 may be installed in the eccentric hole 411.

The eccentric gear 420 is rotatably provided along the outer circumferential surface of the eccentric guide 410. Due to the position of the eccentric guide 410, some of the gear teeth of the eccentric gear 420 engage with the ring gear unit 300, and others engage with the sun gear unit 200. The eccentric gear 420 rotates in the same direction as the sun gear unit 200 and transmits the reduced rotational force to the ring gear unit 300. As a result, the eccentric gear 420 has a significantly lower risk of wear or damage compared to a planetary gear.

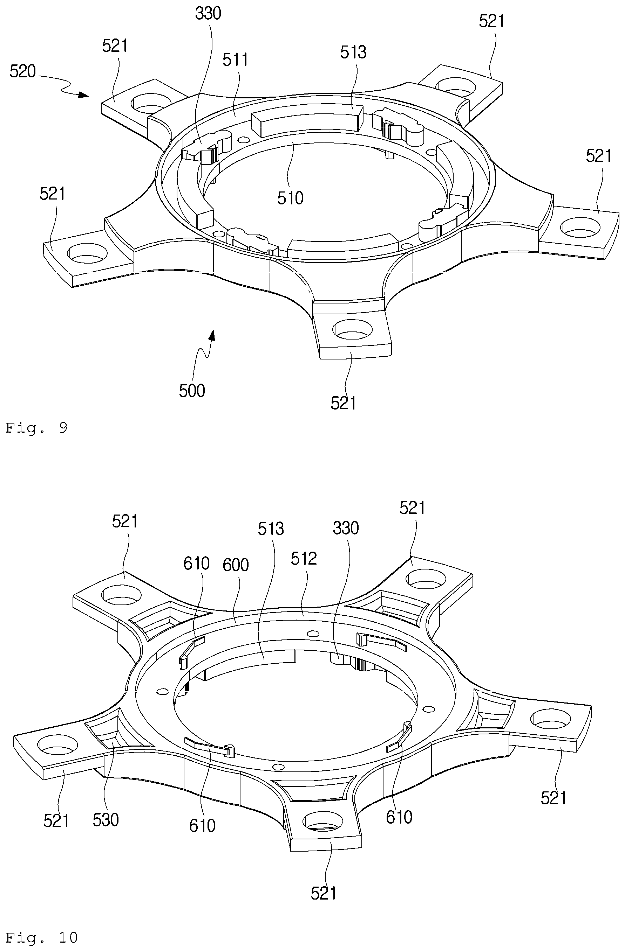

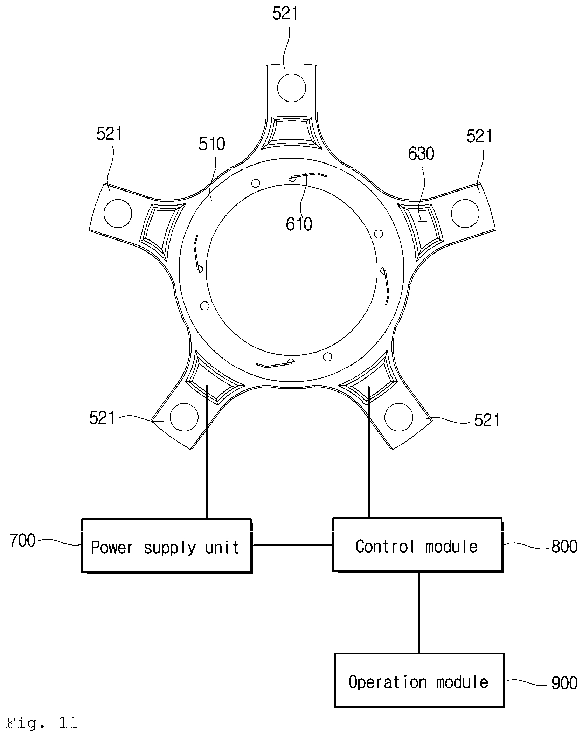

FIGS. 9 and 10 are perspective views of the chainring housing of the bicycle crank shifting device according to the first embodiment of the present invention, and FIG. 11 is a front view of the chainring housing of the bicycle crank shifting device according to the first embodiment of the present invention.

The chainring housing 500 includes the base plate 510 on which the ring gear unit 300 is fixedly installed, and chainring coupling parts 520 formed on the outer surface of the base plate 510 to be spaced apart in the circumferential direction and configured to be coupled with the chainring on the outer circumferential surface thereof.

In the present embodiment, the chainring housing 500 is provided to be separable from the chainring (not shown) so that a user can replace the chainring housing according to preference. However, the chainring housing 500 and the chainring (not shown) are not necessarily limited thereto and may be integrally formed.

In this instance, the chainring coupling part 520 includes a plurality of arms 521 on which the chainring is coupled. Depressions 530 are formed in each of the plurality of arms 521. Due to the formation of the depressions 530, the crank can be further lightweight.

The electromagnet 600 is a magnet that becomes magnetized when power is supplied from the power supply unit 700, and is configured to rotate the elastically supported direct engagement ratchets 330 when power is supplied. That is, when power is not supplied to the electromagnet 600, the direct engagement ratchets 330 are elastically supported outward in the radial direction of the ring gear unit 300 by the elastic members and engaged with the direct engagement ratchet teeth 120. When power is supplied to the electromagnet 600, the direct engagement ratchets 330 rotate inward to release the engagement with the direct engagement ratchet teeth 120.

Meanwhile, the base plate 510 includes a first sidewall 511 protruding from an edge of one surface thereof, and a second sidewall 512 protruding from an edge of the other surface thereof.

As described above, the ring gear unit 300 is provided on one surface of the base plate 510, and the electromagnet 600 and rotation parts 610 are provided on the other surface of the base plate 510.

In the present embodiment, the electromagnet 600 may be arranged on the second sidewall 512 and/or the other surface of the base plate 510. Additionally, the rotation parts 610 are configured to rotate when current is applied to the electromagnet 600 to rotate the direct engagement ratchets 330.

In the present embodiment, the rotation parts 610 are provided to rotate about a shaft, and the rotation parts 610 and the direct engagement ratchets 330 are connected to each other through the shaft. In this instance, the shaft penetrates both one surface and the other surface of the base plate 510. Furthermore, in the present embodiment, the rotation parts 610 may be made of a magnetic material, since the rotation parts 610 must rotate toward the electromagnet 600 when magnetism is generated in the electromagnet 600.

When the direct engagement ratchets 330 are elastically supported, that is, when the direct engagement ratchets 330 are engaged with the direct engagement ratchet teeth 120, the rotation parts 610 are spaced apart from the electromagnet 600. However, when power is applied to the electromagnet 600, the rotation parts 610 rotate toward the electromagnet 600 by magnetic force and are in contact with the electromagnet 600. At this time, the direct engagement ratchets 330 rotate inward to compress the elastic members, thereby releasing the engagement with the direct engagement ratchet teeth 120.

The power supply unit 700 is controlled by the control module 800. That is, the control module 800 selectively supplies power to the electromagnet 600. The power supply unit 700 may be provided as a battery/cell or a rechargeable battery/cell, and when mounted on an electric bicycle, the power supply unit 700 may receive power from the electric bicycle to supply to each component.

The power supply unit 700 and the control module 800 are arranged in the depressions 530. By being arranged in the depression 530, even when the power supply unit 700 and the control module 800 are installed in the crank, an increase in volume can be prevented, and thus miniaturization and weight reduction are not limited.

The operation module 900 is connected to the control module 800 via wireless communication and is configured to selectively turn the power supply unit 700 on or off. The operation module 900 is arranged on a handle frame of the bicycle. When the user operates the operation module 900, a signal is transmitted to the control module 800 via wireless communication, thereby selectively supplying power (current) to the electromagnet 600 through the power supply unit 700.

That is, when the user operates the operation module 900 to shift gears (for example, by pressing a button or operating a lever), a corresponding signal is transmitted to the control module 800 via wireless communication (Bluetooth), and the control module 800 can drive the power supply unit 700 to supply or cut off power to the electromagnet 600.

Next, a bicycle crank shifting device according to a second embodiment of the present invention will be described.

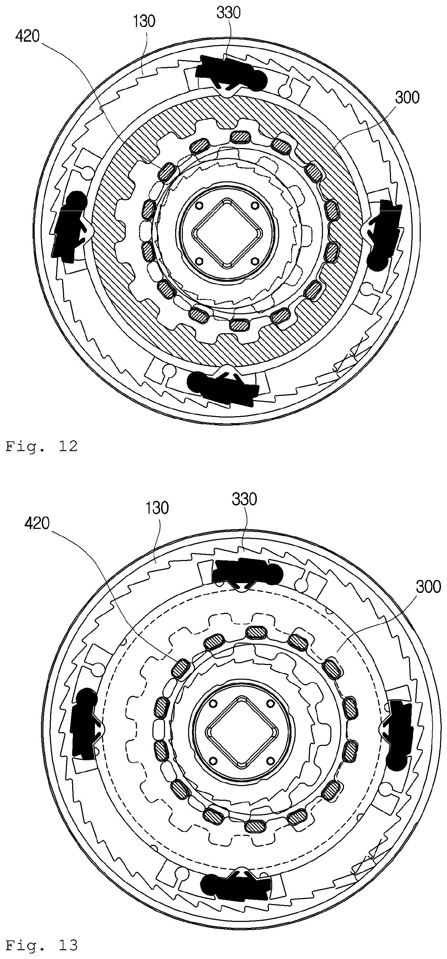

FIG. 12 is an explanatory view of the bicycle crank shifting device according to the second embodiment of the present invention.

The bicycle crank shifting device according to the second embodiment of the present invention includes a crank cover 100, a sun gear unit 200, a ring gear unit 300, a reduction gear unit 400, a chainring housing 500, an electromagnet 600, a power supply unit 700, a control module 800, and an operation module 900. In the present embodiment, except for the rotation part 610, the configurations are the same as those of the first embodiment, and redundant descriptions of the same components will be omitted.

The chainring housing 500 includes the base plate 510 on which the ring gear unit 300 is fixedly installed, and chainring coupling parts 520 formed on the outer surface of the base plate 510 to be spaced apart in the circumferential direction and configured to be coupled with the chainring on the outer circumferential surface thereof.

In the present embodiment, the chainring housing 500 is provided to be separable from the chainring (not shown) so that a user can replace the chainring housing according to preference. However, the chainring housing 500 and the chainring (not shown) are not necessarily limited thereto and may be integrally formed.

In this instance, the chainring coupling part 520 includes a plurality of arms 521 on which the chainring is coupled. Depressions 530 are formed in each of the plurality of arms 521. Due to the formation of the depressions 530, the crank can be further lightweight.

The electromagnet 600 is a magnet that becomes magnetized when power is supplied from the power supply unit 700, and is configured to rotate the elastically supported direct engagement ratchets 330 when power is supplied. That is, when power is not supplied to the electromagnet 600, the direct engagement ratchets 330 are respectively elastically supported by the elastic members and engaged with the direct engagement ratchet teeth 120. When power is supplied to the electromagnet 600, the direct engagement ratchets 330 rotate inward to release the engagement with the direct engagement ratchet teeth 120.

Meanwhile, the base plate 510 includes a first sidewall 511 protruding from an edge of one surface thereof, and a second sidewall 512 protruding from an edge of the other surface thereof.

As described above, the ring gear unit 300 is provided on one surface of the base plate 510, and the electromagnet 600 is provided on the other surface of the base plate 510.

In the present embodiment, the electromagnet 600 may be arranged on the second sidewall 512 and/or the other surface of the base plate 510.

Unlike the first embodiment, the bicycle crank shifting device according to the second embodiment of the present invention includes pins 630 instead of the rotation parts 610.

Each of the pin 630 is arranged to penetrate the base plate 510, and one end of the pin 630 maintains contact with the electromagnet 600. The other end of the pin 630 penetrates the base plate 510 and is arranged in the direct engagement ratchet arrangement part 320. Specifically, the pin 630 may be provided between the outer circumferential surface of the ring gear unit 300 and the direct engagement ratchet 330.

When power is supplied to the electromagnet 600, magnetism is generated also in the pin 630, thereby causing the elastically supported direct engagement ratchet 330 to rotate inward toward the pin 630 and get in contact with the pin 630. At this time, the direct engagement ratchets 330 respectively rotate inward to compress the elastic members, thereby releasing the engagement with the direct engagement ratchet teeth 120. The pin 630 may also be provided as an electromagnet, and may be integrally formed with the electromagnet 600 or separately formed to maintain the contact state. In addition, in the present embodiment, the direct engagement ratchets 330 may be made of a magnetic material, since the direct engagement ratchets 330 must respectively rotate toward the pins 630 when magnetism is generated in the pins 630.

When the direct engagement ratchets 330 are elastically supported, that is, when engaged with the direct engagement ratchet teeth 120, the pins 630 are spaced apart from the direct engagement ratchets 330. When power is supplied to the electromagnet 600, magnetism is generated also in the pins 630, and due to the magnetic force, the direct engagement ratchets 330 respectively rotate toward the pins 630 and get in contact with the electromagnet 600. At this time, the direct engagement ratchets 330 respectively rotate inward to compress the elastic members, thereby releasing the engagement with the direct engagement ratchet teeth 120.

Next, the operation of a crank assembly with a built-in transmission according to an embodiment of the present invention will be described.

For convenience, the operation of the crank assembly with the built-in transmission according to the present embodiment will be described in the order of high-gear - shifting - low-gear.

### 1. High-gear

FIG. 13 is an explanatory view illustrating traveling in a high-gear state of the bicycle crank shifting device according to an embodiment of the present invention.

In the high-gear state, current is not supplied to the electromagnet 600 via the power supply unit 700. That is, the direct engagement ratchets 330 are elastically deployed by the elastic members and engaged with the direct engagement ratchet teeth 120 of the crank cover 100.

Therefore, when the user pedals to rotate the crank cover 100, the crank cover 100 directly rotates the ring gear unit 300 at the same rotational speed. The reduction gear unit 400 is rotated by the rotation of the ring gear unit 300, and the sun gear unit 200 receives the rotational force of the ring gear unit 300 in the reverse direction through the reduction gear unit 400 and idles at a rotational speed faster than that of the crank cover 100.

### 2. Shifting 1

When the user intends to shift in the state in which the bicycle is set to the high-gear, the user operates the operation module 900. That is, the user presses a button or operates a lever. Then, the corresponding signal is transmitted to the control module 800 via wireless communication, and the control module 800 drives the power supply unit 700 to supply power to the electromagnet 600.

When power is supplied to the electromagnet 600, the electromagnet becomes magnetized, causing the direct engagement ratchets 330 to rotate inward (i.e., toward the virtual center of the ring gear unit 300), thereby releasing the engagement with the direct engagement ratchet teeth 120.

### 3. Low-gear

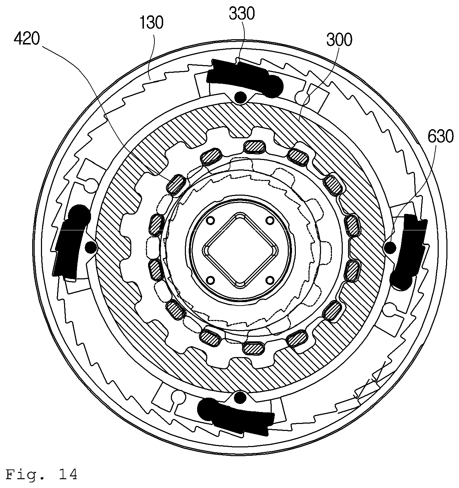

FIG. 14 is an explanatory view illustrating traveling in a low-gear state of the bicycle crank shifting device according to an embodiment of the present invention.

In the low-gear state, current is supplied to the electromagnet 600 via the power supply unit 700. That is, the direct engagement ratchets 330 are in the state of being rotated toward the electromagnet 600 and released in engagement with the direct engagement ratchet teeth 120.

Therefore, when the crank cover 100 rotates, since there is no engagement between the ring gear unit 300 and the crank cover 100, the ring gear unit 300 and the crank cover 100 are not directly rotated together, and the sun gear unit 200 rotates about the coupling shaft 110 of the crank cover 100 in the clockwise direction. The rotation of the sun gear unit 200 causes the engaged reduction gear unit 400 to rotate, and the ring gear unit 300 is rotated at a reduced speed through the reduction gear unit 400.

### 4. Shifting 2

When the user intends to shift in the state in which the bicycle is set to the low-gear, the user operates the operation module 900. That is, the user presses the button or operates the lever. Then, the corresponding signal is transmitted to the control module 800 via wireless communication, and the control module 800 drives the power supply unit 700 to cut off the power supply to the electromagnet 600.

When the power to the electromagnet 600 is cut off, the electromagnet loses magnetism, and the direct engagement ratchets 330 are elastically deployed, namely, elastically supported, by the elastic members, thereby being engaged with the direct engagement ratchet teeth 120.

As described above, according to the present invention, the bicycle crank shifting device can perform shifting according to the rotation of the crank only with the single chainring due to the built-in transmission, and can perform shifting by selectively supplying power to the electromagnet via wireless communication.

### Industrial Applicability

There is provided a bicycle crank shifting device which can perform shifting according to the rotation of the crank only with the single chainring due to the built-in transmission, and can perform shifting by selectively supplying power to the electromagnet via wireless communication.

## Claims

1. A bicycle crank shifting device comprising:
a ring gear unit having direct engagement ratchets arranged on an outer side thereof and gear teeth formed on an inner circumferential surface thereof;
a crank cover having direct engagement ratchet teeth formed on an inner circumferential surface thereof and a coupling shaft formed thereon, the direct engagement ratchet teeth being configured to selectively engage with the direct engagement ratchets;
a sun gear unit mounted on the coupling shaft;
a reduction gear unit including an eccentric guide having an eccentric hole formed therein, and an eccentric gear coupled to the eccentric guide, a portion of the eccentric gear being engaged with the ring gear unit and another portion being engaged with the sun gear unit;
a chainring housing rotating together with the ring gear unit, the chainring housing having one surface on which the direct engagement ratchets are arranged and an outer circumferential surface on which chainring coupling parts are formed;
an electromagnet configured to selectively engage the direct engagement ratchets with the direct engagement ratchet teeth;
a power supply unit controlled by a control module and supplying current to the electromagnet; and
an operation module connected to the control module via wireless communication and configured to selectively turn the power supply unit on or off.

2. The bicycle crank shifting device according to claim 1, wherein the direct engagement ratchets are elastically supported outward in a radial direction of the ring gear unit to engage with the direct engagement ratchet teeth, and is moved in the reverse direction when power is supplied to the electromagnet, thereby releasing the engagement with the direct engagement ratchet teeth.

3. The bicycle crank shifting device according to claim 2, wherein the chainring housing includes a base plate on which the ring gear unit is arranged, the chainring coupling parts being formed spaced apart on an outer circumferential surface of the base plate in a circumferential direction and coupled with a chainring,
wherein the direct engagement ratchets are arranged on one surface of the base plate,
wherein depressions are respectively formed in the chainring coupling parts, and
wherein the power supply unit and the control module are arranged in the depression.

4. The bicycle crank shifting device according to claim 3, further comprising:
rotation parts arranged on the opposite surface of the base plate, connected to the direct engagement ratchets, and configured to rotate around a shaft depending on the application of power to the electromagnet.

5. The bicycle crank shifting device according to claim 4, wherein a first sidewall protrudes from an edge of one surface of the base plate,
wherein a second sidewall protrudes from an edge of an opposite surface of the base plate, and
wherein the electromagnet is arranged on the opposite surface of the base plate.

6. The bicycle crank shifting device according to claim 3, wherein the electromagnet is arranged on the opposite surface of the base plate, and
further comprising pins connected to the electromagnet, the pin penetrating through the base plate, one end of the pin being spaced apart from the direct engagement ratchet, and the direct engagement ratchet being in contact with the pin when current is applied to the electromagnet.
